Europäisches Patentamt

European Patent Office

Office européen des brevets

(11) Numéro de publication: **0 473 998 A2**

# DEMANDE DE BREVET EUROPEEN

(21) Numéro de dépôt: **91113804.8**

(22) Date de dépôt: **17.08.91**

(51) Int. Cl.5: **B42D 15/10**

(30) Priorité: **22.08.90 CH 2730/90**

(43) Date de publication de la demande:
**11.03.92 Bulletin 92/11**

(84) Etats contractants désignés:
**DE ES FR GB IT**

(71) Demandeur: **Bauer, Eric**
**Rue Maujobia 113**
**CH-2006 Neuchatel(CH)**
Demandeur: **Stockburger, Hermann**
**Hebelweg 13**
**W-7847 Badenweiler(DE)**

(72) Inventeur: **Bauer, Eric**
**Rue Maujobia 113**
**CH-2006 Neuchatel(CH)**
Inventeur: **Stockburger, Hermann**
**Hebelweg 13**
**W-7847 Badenweiler(DE)**

(74) Mandataire: **Robert, Jean S.**
**51, route du Prieur**
**CH-1257 Landecy (Genève)(CH)**

(54) **Procédé de fabrication d'une carte informatique munie de signes et carte informatique munie de signes obtenue par la mise en oeuvre de ce procédé.**

(57) Une carte informatique (7) est obtenue par thermo-moulage d'un mélange de polycarbonate pulvérulent avec du noir de fumée à raison de 8 ppm de ce dernier par rapport à la matière thermo-durcissable de base. La face interne de la paroi du moule donnant naissance à la face antérieure de la carte (7) est guillochée, la distance entre les creux, respectivement les saillies, du guillochage étant un multiple (2 à 3) de la longueur d'onde du rayon laser utilisé ensuite pour appliquer sur la carte les signes contrastés. Un tube laser (9), piloté par une unité de pilotage (10) comprenant un programme contenant les indications à faire figurer sur la carte, est utilisé pour diriger un rayonnement laser sur la carte. Les rayons infrarouges sont absorbés par le noir de fumée contenu dans la masse de la matière de la carte qui s'échauffe, ce qui produit un changement de couleur grâce auquel apparaissent des signes tels qu'une signature (12) et une photographie (13).

FIG. 2

La présente invention a pour objet un procédé de fabrication d'une carte informatique munie de signes ainsi qu'une carte informatique munie de signes obtenue par la mise en oeuvre de ce procédé.

Des cartes informatiques munies de signes, destinés notamment à les "personnaliser", c'est-à-dire à leur conférer des caractères propres à leur possesseur, sont connues en soi.

De telles cartes sont, jusqu'à présent, du type dit "multicouches" ou en "sandwiches", c'est-à-dire qu'elles sont formées de feuilles de PVC (chlorure de polyvinyl), à nombre impair de couches, afin qu'il y ait une couche médiane neutre qui ne se déforme pas lorsque la carte est cintrée. La première couche, côté recto, est transparente, la deuxième couche étant constituée par une couche de blocage d'absorption des rayons infrarouges.

L'application des signes, sur de telles cartes, s'effectue au rayon laser, le rayonnement étant retenu par la couche absorbante et produisant une carbonisation de celle-ci grâce à laquelle la coloration change.

L'inconvénient de telles cartes réside avant tout dans le matériau utilisé, lequel est peu flexible, non biodégradable, sa destruction conduisant à la production de dioxine et, de surcroît, coûteux.

Le but de la présente invention est de remédier à ces inconvénients.

Ce but est atteint grâce aux moyens définis dans les revendications 1 et 9.

Le dessin représente, à titre d'exemple, une forme d'exécution de l'objet de l'invention.

La fig. 1 est une vue en perspective schématique d'une installation permettant l'obtention de la carte vierge, c'est-à-dire non munie des signes de personnalisation, et

La fig. 2 est une vue schématique en perspective de l'installation permettant l'application desdits signes sur la carte obtenue à l'aide de l'installation de la figure 1.

Cette installation comprend un premier récipient, désigné par 1, dans lequel on place une matière thermoplastique pulvérulente (granulée), moulable, par exemple un polycarbonate, et un deuxième récipient, désigné par 2, dans lequel on place une matière pulvérulente apte à absorber les rayons infrarouges, par exemple du carbone (noir de fumée). La quantité de poudre de carbone par rapport au polycarbonate variera de 4 à 24 ppm (part par million) et sera de préférence de 8 ppm.

Ces deux récipients sont reliés par des conduits 3 et 4, respectivement, à une installation mélangeuse 5 où s'effectue un mélange intime des deux composants.

De là, la matière ainsi mélangée est acheminée dans un moule 6 où s'effectue, à chaud, le moulage de cartes informatiques, dont l'une d'elle a été représentée en 7. Une telle carte pourra comporter un microprocesseur, tel qu'indiqué en 8, par exemple, qui y sera incorporé lors du moulage.

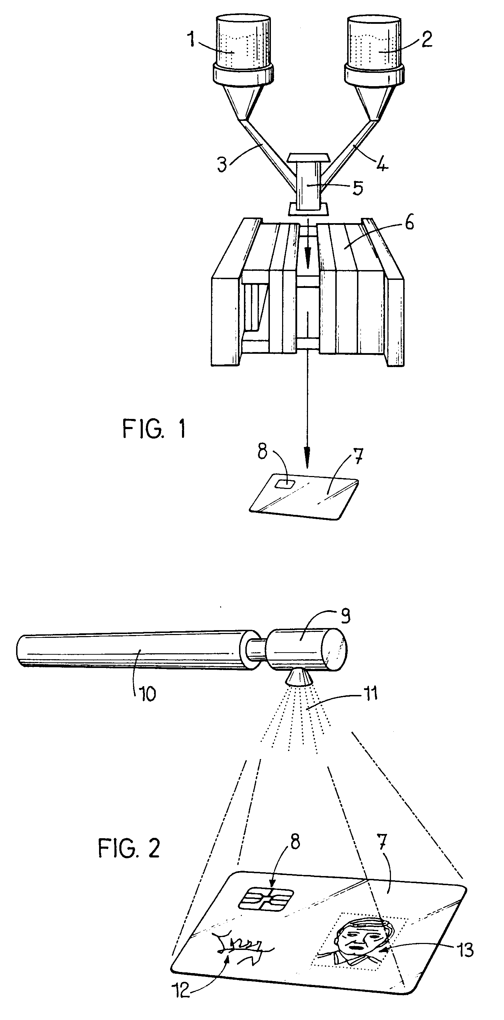

L'application des signes de personnalisation à la carte 7 s'effectuera à l'aide d'un tube laser tel le tube 9 représenté à la figure 2, dont le rayon est "piloté". Le programme de commande de ce tube laser sera introduit dans l'unité de pilotage représentée schématiquement en 10. Ce programme sera constitué par une disquette ou par une bande magnétique ou tout autre support, les indications étant du type digital.

L'élaboration d'un tel programme, qui ne sera pas décrite ici en détail, étant étrangère à la présente invention, s'effectue de façon connue en soi. C'est ainsi que l'on pourra enregistrer l'image du visage du futur porteur de la carte, à l'aide d'une caméra, comme on pourra également enregistrer sa signature, également à l'aide d'une caméra, les informations analogiques fournies par ces caméras devant ensuite être "digitalisées" pour être utilisées par l'unité 10 de pilotage du laser.

Le rayonnement laser, indiqué schématiquement en 11 à la figure 2, est envoyé sur la carte 7. Le fait que les rayons infrarouges soient absorbés par le carbone (noir de fumée) produit un échauffement provoquant une modification de la couleur de la masse. Des signes, en l'occurrence la signature du porteur indiquée en 12 et sa photographie indiquée en 13, apparaissent alors sur la carte.

L'expérience a montré que, pour que le résultat soit satisfaisant, c'est-à-dire que les signes soient bien contrastés, il faut que l'état de surface de la face antérieure de la carte, sur laquelle les signes doivent être visibles, soit fonction de la longueur d'onde du rayon laser utilisé.

C'est ainsi que cet état de surface, ou rugosité, sera de préférence un guillochage que l'on appliquera préalablement sur la face intérieure du moule destinée à réaliser la face antérieure de la carte. La distance entre les saillies de ce guillochage, ou entre les creux, que ce guillochage soit formé de lignes parallèles ou d'un réseau de lignes parallèles se croisant, devra être de 2 à 3 fois la longueur d'onde du laser, lequel sera, de préférence, un laser YAG de longueur d'onde de 1064 nanomètres. Si le rapport entre la distance entre les éléments du relief de la face antérieure de la carte et la longueur d'onde du laser est respecté, la qualité des signes appliqués sur la carte par le laser est la meilleure.

Il est à remarquer qu'il n'est pas nécessaire que toute la surface antérieure de la carte présente la rugosité désirée pour l'application des signes, mais que l'on pourra prévoir le cas où seules des zones de celle-ci où, précisément, les signes doivent apparaître, soient ainsi préparées.

Il est également à remarquer que, afin d'éclaircir la carte que la présence du noir de fumée a tendance à foncer, on pourra ajouter dans le récipient 1 (fig. 1), avant le mélange avec le noir de fumée, un pigment pulvérulent fluorescent, en même quantité que le noir de fumée.

Enfin, on pourra apposer sur la face antérieure de la carte, une fois les signes appliqués sur celle-ci, une couche de laque transparente de protection. Le cas échéant, cette couche pourrait être appliquée avant les signes de personnalisation.

**Revendications**

1.  Procédé de fabrication d'une carte informatique munie de signes, caractérisé par le fait qu'on utilise une matière thermoplastique pulvérulente à laquelle on mélange un matériau pulvérulent apte à absorber les rayons infrarouges, réalise la carte à l'aide de ladite matière, par moulage à chaud, puis soumet ladite carte à l'action d'un rayon laser piloté produisant un échauffement de la matière absorbant les rayons infrarouges tel que les zones ainsi échauffées subissent des modifications de couleur grâce auxquelles apparaissent lesdits signes, la face intérieure de la paroi du moule sur laquelle est moulée la face de la carte où doivent apparaître les signes présentant un relief dont la distance entre les creux, respectivement les saillies, est un multiple de la longueur d'onde du rayon laser utilisé.

2.  Procédé suivant la revendication 1, caractérisé par le fait qu'on utilise, comme matière absorbant les rayons infrarouges, du noir de fumée.

3.  Procédé suivant la revendication 2, caractérisé par le fait que la quantité de noir de fumée par rapport à la matière thermoplastique de base varie de 4 à 24 ppm.

4.  Procédé suivant la revendication 1, caractérisé par le fait que, aux fins d'éclaircir la couleur de la carte, on ajoute au mélange, avant le moulage, de la matière pulvérulente fluorescente.

5.  Procédé suivant la revendication 4, caractérisé par le fait que la quantité de matière fluorescente par rapport à la matière thermoplastique de base varie de 4 à 24 ppm.

6.  Procédé suivant la revendication 1, caractérisé par le fait qu'on utilise un moule dont la distance entre les creux ou entre les saillies du relief de la face interne donnant naissance à la face de la carte sur laquelle doivent apparaître lesdits signes se situe entre 2 à 3 fois la longueur d'onde du rayon laser utilisé.

7.  Procédé suivant la revendication 1, caractérisé par le fait qu'on utilise un moule dont le relief de la face interne est un guillochage.

8.  Procédé suivant la revendication 6, caractérisé par le fait qu'on utilise un rayon laser ayant une longueur d'onde de l'ordre de 1000 nanomètres.

9.  Carte informatique munie de signes obtenue par la mise en oeuvre du procédé suivant la revendication 1.

FIG. 1

FIG. 2

4